(19)

Europäisches
Patentamt
European
Patent Office
Office européen
des brevets

(11) **EP 2 660 339 A2**

(12) **EUROPEAN PATENT APPLICATION**
published in accordance with Art. 153(4) EPC

(43) Date of publication:
**06.11.2013 Bulletin 2013/45**

(51) Int Cl.:
***C21B 13/14*** *(2006.01)*

(21) Application number: **11853296.9**

(22) Date of filing: **28.12.2011**

(86) International application number:
**PCT/KR2011/010200**

(87) International publication number:
**WO 2012/091437 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010  KR 20100137281
08.07.2011  KR 20110068048
19.07.2011  KR 20110071413
19.07.2011  KR 20110071414**

(71) Applicant: **Posco
Pohang
Kyungsangbook-do 790-300 (KR)**

(72) Inventors:
• **CHUNG, Joon-Yang
Pohang-si
Kyungsangbook-do 790-360 (KR)**
• **KWON, Oh-Joon
Pohang-si
Kyungsangbook-do 790-360 (KR)**
• **PARK, Sung-Ho
Gwangyang-si
Jeollanam-do 545-711 (KR)**

• **KIM, Dong-Soo
Gwangyang-si
Jeollanam-do 545-711 (KR)**
• **PARK, Jong-Su
Pohang-si
Kyungsangbook-do 790-360 (KR)**
• **CHOI, Jin-Sik
Pohang-si
Kyungsangbook-do 790-360 (KR)**
• **KIM, Seong-Yeon
Pohang-si
Kyungsangbook-do 790-360 (KR)**
• **KIM, Do-Hyung
Pohang-si
Kyungsangbook-do 790-360 (KR)**
• **PAEK, Chan-Joon
Pohang-si
Kyungsangbook-do 790-360 (KR)**
• **LEE, Jong-Hwan
Pohang-si
Kyungsangbook-do 790-360 (KR)**

(74) Representative: **Zech, Stefan Markus et al
Meissner, Bolte & Partner GbR
Postfach 86 06 24
81633 München (DE)**

(54) **INTEGRATED STEEL MANUFACTURING SYSTEM AND METHOD FOR INTEGRATED STEEL MANUFACTURING**

(57)    Provided is an integrated system for manufacturing steel including an iron making apparatus and a steel making apparatus. The steel making apparatus produces molten steel from molten iron and agglomerated reduced iron received from the iron making apparatus. The iron making apparatus includes a first iron ore reducing device, first and second agglomerating devices, and a smelting furnace. The fine iron ore reducing device includes first and second fluidized reduction furnace apparatuses respectively including at least one fluidized reduction furnace for reducing fine iron ore. The first and second agglomerating devices agglomerates reduced fine iron ore received from the first and second fluidized reduction furnace apparatuses, respectively. The smelting furnace produces molten iron by melting agglomerated reduced iron received from the first agglomerating device.

**EP 2 660 339 A2**

FIG. 7

**Description**

[Technical Field]

The present invention relates to an integrated system and method for manufacturing steel, and more particularly, to an eco-friendly integrated system and method for manufacturing steel consuming low amounts of energy and markedly reducing environmental pollutants in a raw material processing process and an iron making process.

[Background Art]

Generally, molten iron is produced in a blast furnace, and molten steel is produced through a refining process in a converter by using the molten iron as a main material.

A molten iron making process having energy efficiency and productivity higher than that of a blast furnace process has not yet been developed. However, such a blast furnace process requires coke obtained from a particular kind of coal as a carbon source functioning as a fuel and reducing agent, and usually requires sintered ore obtained through a series of agglomeration processes as an iron source.

That is, current blast furnace processes require equipment for preliminarily processing raw materials such as coke making equipment and sintering equipment, and thus enormous expenses may be required to construct such accessory equipment as well as blast furnace apparatuses.

Furthermore, such preliminary raw-material processing equipment generates considerable amounts of environmental pollutants such as SOx, NOx, and dust, and thus additional equipment may be required to collect and treat such environmental pollutants. Particularly, since environmental regulations have been increasingly tightened in many countries, blast furnaces for producing molten iron are losing competitiveness due to the enormous expenses incurred in the equipping thereof with pollutant processing equipment.

A great deal of research has been conducted into developing processes aimed at solving the above-described problems related to blast furnaces. Among such processes under development, a coal-based smelting reduction process is a noteworthy molten iron producing process because non-coking coal can be used as a fuel and reducing agent and fine iron ore, accounting for 80% of worldwide ore production, can be used as an iron source.

However, the amount of molten iron able to be produced through such a coal-based smelting reduction process by unit smelting reduction equipment is not yet sufficient, as compared to the amount of molten iron able to be produced by a large blast furnace, such as a blast furnace capable of producing three to four million tons of molten iron per year. Therefore, many pieces of smelting reduction equipment have to be constructed in order to produce the same amount of molten iron as the amount of molten iron able to be produced by a single blast furnace, which may take up a large area in a steel mill. In addition, if a large amount of scrap steel is used to make up for insufficient molten iron, a hot metal ratio (HMR) or molten iron ratio may be lowered, and heat may become insufficient.

Therefore, there is an increasing need for an integrated system and method for manufacturing steel through processes simplified by reducing iron ore in a steel making process.

[Disclosure]

[Technical Problem]

An aspect of the present invention provides an eco-friendly integrated system and method for manufacturing steel from pig iron while consuming low amounts of energy, wherein the pig iron is provided from a smelting reduction process performed by molten iron manufacturing equipment via multiple routes.

Another aspect of the present invention provides an integrated system and method for manufacturing a steel sheet from molten steel produced as described above, by casting and rolling the molten steel in a single process.

Another aspect of the present invention provides an integrated system and method for manufacturing steel at a production capability of three or more million tons per year to four or more million tons per year.

Another aspect of the present invention provides an integrated system and method for manufacturing a large amount of steel by using scrap steel as well as molten iron produced through a smelting reduction process in molten iron manufacturing equipment while solving the problem of insufficient heating that may worsen as the use of scrap steel increases.

Another aspect of the present invention provides an integrated system and method for manufacturing steel while generating fewer pollutants by reducing fine iron ore without a preliminary process and directly performing a smelting reduction process on the reduced fine iron ore in an electric furnace.

The present invention is not limited to the above-mentioned aspects, and those having skill in the art to which the present invention pertains will be able to easily understand other aspects of the present invention from the descriptions provided below.

[Technical Solution]

According to an aspect of the present invention, there is provided an integrated system for manufacturing steel, the integrated system including: an iron making apparatus; and a steel making apparatus configured to produce molten steel from molten iron and agglomerated reduced iron received from the iron making apparatus, wherein the iron making apparatus includes: a fine iron ore reducing device including first and second fluidized reduction furnace apparatuses respectively including at least one fluidized reduction furnace for reducing fine iron ore; first and second agglomerating devices configured to agglomerate reduced fine iron ore received from the first and second fluidized reduction furnace apparatuses, respectively; and a smelting furnace configured to produce molten iron by melting agglomerated reduced iron received from the first agglomerating device.

A final fluidized reduction furnace of the first fluidized reduction furnace apparatus may be connected to the smelting furnace through a gas supply pipe for allowing gas to flow therethrough, and a first fluidized reduction furnace of the first fluidized reduction furnace apparatus may be connected to a final fluidized reduction furnace of the second fluidized reduction furnace apparatus through a reducing gas connection pipe for allowing gas to flow therethrough.

The steel making apparatus may include a converter or an electric furnace, and the converter or the electric furnace may be connected to the second agglomerating device through an agglomerated reduced iron transfer pipe to allow agglomerated reduced iron to be transferred therethrough.

According to another aspect of the present invention, there is provided an integrated system for manufacturing steel, the integrated system including: an iron making apparatus; and a steel making apparatus configured to produce molten steel from molten iron received from the iron making apparatus and scrap steel, wherein the iron making apparatus includes: a fine iron ore reducing device including a fluidized reduction furnace apparatus that includes at least one fluidized reduction furnace for reducing fine iron ore; an agglomerating devices configured to agglomerate reduced fine iron ore received from the fluidized reduction furnace apparatus; and a smelting furnace configured to produce molten iron by melting agglomerated reduced iron received from the agglomerating device.

The steel making apparatus may include a converter or an electric furnace.

A nozzle may be provided in a lower portion of the converter to supply fuel and oxygen ($O_2$) to the converter, and a lance may be provided in an upper portion of the converter to supply oxygen-containing gas to the converter.

According to another aspect of the present invention, there is provided an integrated system for manufacturing steel, the integrated system including: an agglomerated reduced iron making apparatus; and an electric furnace, wherein the agglomerated reduced iron making apparatus includes: a fine iron ore reducing device including a fluidized reduction furnace apparatus that includes at least one fluidized reduction furnace for reducing fine iron ore; and an agglomerating device configured to agglomerate reduced fine iron ore received from the fluidized reduction furnace apparatus.

The integrated system may further include a slab casting apparatus in which a continuous casting machine configured to cast molten steel produced by the steel making apparatus may be connected to a rolling mill in series.

The continuous casting machine may be configured to produce a slab having a thickness of 30 mm to 150 mm at a rate of 4 mpm to 15 mpm, and the rolling mill may include a finishing mill, wherein the integrated system may further include a steel sheet heater and a coil box that may be disposed between the continuous casting machine and the finishing mill, and the coil box may store a steel sheet after coiling thereof.

The integrated system may further include a roughing mill between the continuous casting machine and the finishing mill.

According to another aspect of the present invention, there is provided an integrated method for manufacturing steel, the integrated method including: performing a molten iron making process; and performing a molten steel making process to produce molten steel from molten iron and agglomerated reduced iron that are produced in the molten iron making process, wherein the molten iron making process includes: producing reduced fine iron ore by reducing fine iron ore in first and second fluidized reduction furnace apparatuses; producing agglomerated reduced iron in first and second agglomerating devices by using reduced fine iron ore, supplied from the first and second fluidized reduction furnace apparatuses to the first and second agglomerating devices, respectively; and producing molten iron in a smelting furnace by melting agglomerated reduced iron received from the first agglomerating device.

Exhaust gas discharged from the first fluidized reduction furnace apparatus may be supplied to the second fluidized reduction furnace apparatus to be used as a reducing gas.

According to another aspect of the present invention, there is provided an integrated method for manufacturing steel, the method including: performing a molten iron making process; and performing a molten steel making process to produce molten steel by using molten iron produced in the molten iron making process, wherein the molten iron making process includes: producing reduced fine iron ore by fluidizing and reducing fine iron ore; producing agglomerated reduced iron by receiving and agglomerating the reduced fine iron ore; and producing molten iron by melting agglomerated reduced iron produced by an agglomerating device, wherein in the steel making process, scrap steel is used together with the molten iron at a hot melt ratio (HMR) of 70 weight% or less.

According to another aspect of the present invention, there is provided an integrated method for manufacturing steel, the integrated method including: producing reduced fine iron ore by fluidizing and reducing fine iron ore; producing agglomerated reduced iron by receiving and agglomerating the reduced fine iron ore; and producing molten steel by melting the agglomerated reduced iron in an electric furnace.

The integrated method may further include performing a slab casting process in which a continuous casting process and a rolling process are performed in series, wherein the continuous casting process may be performed to cast molten iron produced in the producing of the molten steel.

The continuous casting process may be performed at a rate of 4 mpm to 15 mpm to produce a slab having a thickness of 30 mm to 150 mm, and the rolling process may include a finish rolling process, wherein the integrated method may further include a steel sheet heating process and a coiling and storing process between the continuous casting process and the finishing rolling process, and a steel sheet may be coiled and stored in the coiling and storing process.

The integrated method may further include a rough process between the casting process and the finishing rolling process.

[Advantageous Effects]

According to the integrated system and method for manufacturing steel of the embodiments of the invention, raw-material supply conditions or environments can be coped with in a flexible manner, and pollution can be markedly reduced.

In addition, according to the integrated system and method for manufacturing steel of the invention, productivity comparable to that of an integrated steel manufacturing system and method using a blast furnace can be obtained.

In addition, according to the integrated system and method for manufacturing steel of the invention, a large amount of steel can be produced using scrap steel as well as molten iron produced through a smelting reduction process in molten iron manufacturing equipment while solving the problem of insufficient heating that may worsen as the use of scrap steel increases.

In addition, according to the integrated system and method for manufacturing steel of the invention, steel can be manufactured while generating fewer pollutants by reducing fine iron ore without a preliminary process and directly performing a smelting reduction process on the reduced fine iron ore in an electric furnace.

[Description of Drawings]

FIG. 1 is a schematic view illustrating an integrated system for manufacturing steel according to an embodiment of the invention.
FIG. 2 is a schematic view illustrating an integrated system for manufacturing steel according to another embodiment of the invention.

FIG. 3 is a schematic view illustrating an integrated system for manufacturing steel according to another embodiment of the invention.
FIG. 4 is a schematic view illustrating an integrated system for manufacturing steel according to another embodiment of the invention.
FIG. 5 is a schematic view illustrating an integrated system for manufacturing steel according to another embodiment of the invention.
FIG. 6 is a schematic view illustrating an integrated system for manufacturing steel according to another embodiment of the invention.
FIG. 7 is a schematic view illustrating a system formed by adding a slab casting apparatus to the integrated system for manufacturing steel of FIG. 1.
FIG. 8 is a schematic view illustrating a system formed by adding a slab casting apparatus to the integrated system for manufacturing steel of FIG. 2.
FIG. 9 is a schematic view illustrating a system formed by adding a slab casting apparatus to the integrated system for manufacturing steel of FIG. 3.
FIG. 10 is a schematic view illustrating a system formed by adding a slab casting apparatus to the integrated system for manufacturing steel of FIG. 4.
FIG. 11 is a schematic view illustrating a system formed by adding a slab casting apparatus to the integrated system for manufacturing steel of FIG. 5.
FIG. 12 is a schematic view illustrating a system formed by adding a slab casting apparatus to the integrated system for manufacturing steel of FIG. 6.

[Best Mode]

The present invention will now be described in detail. In the present invention, the term "integrated system and method for manufacturing steel" denotes a steel making system and method including a process of producing molten iron from iron ore and a process of producing molten steel from the molten iron. An integrated steel manufacturing system of the invention can be described in two steps: an iron making process for producing molten iron, and a steel making process for producing molten steel.

In an iron making process, molten iron is produced by reducing fine iron ore using smelting reduction equipment (smelting furnace). In detail, fine iron ore is reduced by fluidization and is agglomerated, and molten iron is produced by further reducing the agglomerated reduced fine iron ore in the smelting furnace. However, as described above, the amount of molten iron able to be produced in the smelting furnace is insufficient as compared to the amount of molten iron able to be produced in a blast furnace, and thus it may be required to construct a plurality of smelting furnaces to obtain a sufficient amount of molten iron. This lowers productivity and may make it difficult to find a site for building a steel mill.

According to an embodiment of the invention, a process of reducing fine iron ore by fluidization and agglomerating the reduced fine iron ore is additionally performed one or more times. This does not mean that agglomerated reduced fine iron ore prepared through an additional repetition of the process is melted and further reduced in a smelting furnace to produce molten iron, but means that agglomerated reduced fine iron ore prepared through an additional repetition of the process is reduced in the following steel making process to produce molten steel.

That is, the embodiment of the invention relates to an integrated system and method for manufacturing steel, in which: fine iron ore is reduced and agglomerated; a portion  of the agglomerated reduced fine iron ore is melted to produce molten iron; and molten steel is produced using the molten iron and the remainder of the agglomerated reduced fine iron ore as main materials.

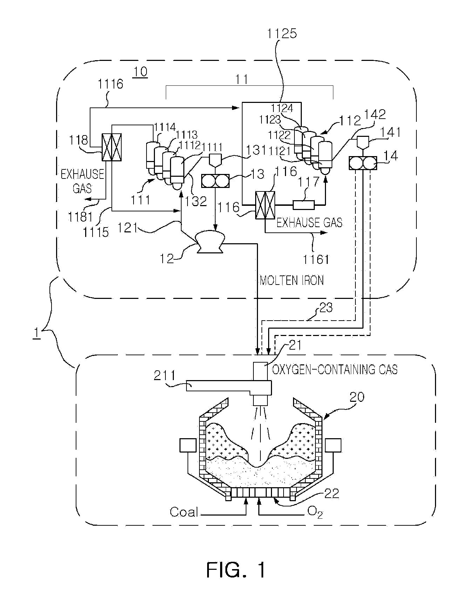

FIG. 1 is a schematic view illustrating an integrated system for manufacturing steel according to the embodiment of the invention.

As shown in FIG. 1, the integrated steel manufacturing system 1 of the embodiment includes an iron making apparatus 10 and a steel making apparatus 20 (a converter is shown as an example of the steel making apparatus 20, and the steel making apparatus 20 will be described hereinafter for the case in which the steel making apparatus 20 is a converter).

The iron making apparatus 10 includes: a fine iron ore reducing device 11 for reducing fine iron ore; agglomerating devices 13 and 14 for agglomerating fine iron ore reduced by the fine iron ore reducing device 11; and a smelting furnace 12 for producing molten iron by melting fine iron ore agglomerated by the agglomerating devices 13 and 14.

The fine iron ore reducing device 11 includes a first fluidized reduction furnace apparatus 111 and a second fluidized reduction furnace apparatus 112. Each of the  first fluidized reduction furnace apparatus 111 and the second fluidized reduction furnace apparatus 112 includes at least one fluidized reduction furnace.

In the first and second fluidized reduction furnace apparatuses 111 and 112, fine iron ore is reduced while being blown with gas. Fine iron ore is reduced step by step in a series of fluidized reduction furnaces of the first and second fluidized reduction furnace apparatuses 111 and 112. That is, in the fluidized reduction furnaces, fine iron ore is reduced step by step by a reducing gas. The number of the fluidized reduction furnaces is unlimited. For example, two or more fluidized reduction furnaces may be provided for a sufficient reduction to occur. In another example, three or more fluidized reduction furnaces may be provided. As described above, agglomerated reduced iron is supplied to the smelting furnace (smelting reduction equipment) 12 through the first fluidized reduction furnace apparatus 111 and the first agglomerating device 13, and the agglomerated reduced iron is further reduced in the smelting furnace 12. For this, the first fluidized reduction furnace apparatus 111 may include three or four fluidized reduction furnaces 1111, 1112, 1113, and 1114.

Agglomerated reduced iron made by the second  fluidized reduction furnace apparatus 112 and the second agglomerating device 14 is directly supplied to the converter 20 without additional smelting reduction in the smelting furnace 12. Thus, the second fluidized reduction furnace apparatus 112 may include four fluidized reduction furnaces 1121, 1122, 1123, and 1124 for sufficient reduction.

However, the number of fluidized reduction furnaces of the first and second fluidized reduction furnace apparatuses 111 and 112 is not limited.

In the embodiment shown in FIG. 1, the first fluidized reduction furnace apparatus 111 includes four fluidized reduction furnaces 1111, 1112, 1113, and 1114, and the second fluidized reduction furnace apparatus 112 includes four fluidized reduction furnaces 1121, 1122, 1123, and 1124.

Like general fluidized reduction furnaces, the fluidized reduction furnaces 1111, 1112, 1113, and 1114, and the fluidized reduction furnaces 1121, 1122, 1123, and 1124 may include gas distributing plates (not shown).

The agglomerating devices 13 and 14 include: the first agglomerating device 13 configured to receive reduced fine iron ore from the first fluidized reduction furnace apparatus 111 and agglomerate the reduced fine iron ore; and the second agglomerating device 14 configured to receive reduced fine iron ore from the second fluidized reduction furnace apparatus 112 and agglomerate the reduced fine iron ore.

The first agglomerating device 13 includes a first hopper 131 for storing reduced fine iron ore and supplying the reduced fine iron ore to the first agglomerating device 13, and the first hopper 131 is connected to the final fluidized reduction furnace 1111 of the first fluidized reduction furnace apparatus 111 through a first reduced iron supply pipe 132 to receive reduced fine iron ore.

The second agglomerating device 14 includes a second hopper 141 for storing reduced fine iron ore and supplying the reduced fine iron ore to the second agglomerating device 14, and the second hopper 141 is connected to the final fluidized reduction furnace 1121 of the second fluidized reduction furnace apparatus 112 through a second reduced iron supply pipe 142 to receive reduced fine iron ore.

The smelting furnace 12 produces molten iron by melting agglomerated reduced iron received from the first agglomerating device 13.

The smelting furnace 12 is connected to final fluidized reduction furnace 1111 of the first fluidized  reduction furnace apparatus 111 of the fine iron ore reducing device 10 through a gas supply pipe 121 so that gas can flow therebetween, and the fluidized reduction furnaces 1111, 1112, 1113, and 1114 of the first fluidized reduction furnace apparatus 111 are connected to each other through gas supply pipes (not shown) so that gas can flow therebetween.

Reducing gas is supplied through the gas supply pipe 121 to the fluidized reduction furnaces 1111, 1112, 1113, and 114 sequentially from the final fluidized reduction furnace 1111 to the first fluidized reduction furnace 1114.

On the other hand, fine iron ore is supplied to the fluidized reduction furnaces 1114, 1113, 1112, and 1111 from the first fluidized reduction furnace 1114 to the final fluidized reduction furnace 1111. The fine iron ore is reduced by the reducing gas while being sequentially carried in the fluidized reduction furnaces 1114, 1113, 1112, and 1111.

Fine iron ore may be reduced in the fluidized reduction furnaces 1121, 1122, 1123, and 1124 of the second fluidized reduction furnace apparatus 112 in the same manner as in the fluidized reduction furnaces 1111, 1112, 1113, and 1114 of the first fluidized reduction furnace apparatus 111.

That is, the fluidized reduction furnaces 1121, 1122, 1123, and 1124 of the second fluidized reduction furnace apparatus 112 are connected to each other through gas supply pipes (not shown) so that gas can flow therebetween.

Reducing gas is supplied to the fluidized reduction furnaces 1121, 1122, 1123, and 1124 from the final fluidized reduction furnace 1121 to the first fluidized reduction furnace 1124.

On the other hand, fine iron ore is supplied to the fluidized reduction furnaces 1124, 1123, 1123, and 1121 from the first fluidized reduction furnace 1124 to the final fluidized reduction furnace 1121, and the fine iron ore is reduced by the reducing gas while being sequentially carried in the fluidized reduction furnaces 1124, 1123, 1122, and 1121.

Reducing gas may be supplied to the second fluidized reduction furnace apparatus 112 from the smelting furnace or from an additional reducing gas supply line. In embodiments of the invention, the first fluidized reduction furnace 1114 of the first fluidized reduction furnace apparatus 111 may be connected to the fluidized reduction furnaces of the second fluidized reduction furnace apparatus 112 through a reducing gas connection pipe 1116 for efficient use of reducing gas. That is, gas emitted from the first fluidized reduction furnace apparatus 111 can be supplied to the second fluidized reduction furnace apparatus 112.

The reducing gas connection pipe 1116 connects the first fluidized reduction furnace 1114 of the first fluidized reduction furnace apparatus 111 to the final fluidized reduction furnace 1111 of the second fluidized reduction furnace apparatus 112 so that gas emitted from the first fluidized reduction furnace apparatus 111 can be supplied to the second fluidized reduction furnace apparatus 112. For using gas more efficiently as described later, the first fluidized reduction furnace 1114 or 1124 of at least one equipment of the first and second fluidized reduction furnace apparatuses 111 and 112 may be connected to the final fluidized reduction furnace 1111 or 1121 of the at least one equipment through a circulation pipe 1115 or 1125, and gas emitted from the first fluidized reduction furnace of the at least one equipment may be supplied to the final fluidized reduction furnace of the other equipment. If the first fluidized reduction furnace apparatus 111 or the second fluidized reduction furnace apparatus 112 includes the circulation pipe 1115 or 1125, the reducing gas connection pipe 1116 may be connected to the circulation pipe 1115 or 1125 so that the first fluidized reduction furnace 1114 of the first fluidized reduction furnace apparatus 111 can be connected to the final fluidized reduction furnace 1121 of the second fluidized reduction furnace apparatus 112 to allow gas to flow therebetween. However, even in the case that the circulation pipe 1115 or 1125 is provided, the reducing gas connection pipe 1116 may not be connected to the circulation pipe 1115 or 1125 but may be directly connected between the first fluidized reduction furnace 1114 of the first fluidized reduction furnace apparatus 111 and the final fluidized reduction furnace 1121 of the second fluidized reduction furnace apparatus 112. In some cases, the reducing gas connection pipe 1116 may be connected to one of the circulation pipes 1115 and 1125.

In the embodiment of the invention, the final fluidized reduction furnace 1111 and the first fluidized reduction furnace 1114 of the first fluidized reduction furnace apparatus 111 may be connected through the first circulation pipe 1115.

A carbon dioxide removing device 118 may be provided on the first circulation pipe 1115, and an exhaust gas discharge pipe 1181 may be connected to the carbon dioxide removing device 118.

In addition, a heater (not shown) may be provided on a portion of the first circulation pipe 1115 between the carbon dioxide removing device 118 and the final fluidized reduction furnace 1111 so as to heat circulating gas.

The carbon dioxide removing device 118 provided on the first circulation pipe 1115 removes carbon dioxide from gas emitted from the first fluidized reduction furnace 111, and then the gas is supplied to the final fluidized reduction furnace 1111 or the second fluidized reduction furnace apparatus 112. In this way, reducing gas can be recycled. In addition, the heater may be used to control the temperature of circulating gas.

In addition, the final fluidized reduction furnace 1111 or 1121 and the first fluidized reduction furnace 1114 or 1124 of the second fluidized reduction furnace apparatus 112 may be connected through the second circulation pipe 1125.

A carbon dioxide removing device 116 may be provided on the second circulation pipe 1125, and an exhaust gas discharge pipe 1161 may be connected to the carbon dioxide removing device 116.

In addition, a heater 117 may be provided on a portion of the second circulation pipe 1125 between the carbon dioxide removing device 116 and the final fluidized reduction furnace 1121 so as to heat circulating gas.

The carbon dioxide removing device 116 provided on the second circulation pipe 1125 removes carbon dioxide from gas emitted from the second fluidized reduction furnace apparatus, and then the gas is supplied to the final fluidized reduction furnace. In this way, reducing gas can be recycled. In addition, the heater 117 may be used to control the temperature of circulating gas.

In another embodiment of the invention, a dust collector (not shown) such as a wet-type dust collector may be disposed on an exhaust gas line such as the reducing gas connection pipe connecting the first and second fluidized reduction furnace apparatuses 111 and 112 so as to remove dust, sulfur, and other impurities from gas.

After the iron making process, a steel making process may be performed using the steel making apparatus including refining equipment such as a converter or an electric furnace.

In a converter, oxygen or oxygen-containing gas is supplied to convert molten iron almost saturated with carbon into molten steel by burning off the carbon with the oxygen or oxygen-containing gas, and the molten steel is heated by heat generated by the combustion of the carbon or other burnable substances.

There are many kinds of converters, and any kind of converter can be used in the present invention. That is, there are many kinds of converters such as top-blown converters, bottom-blown converters, top and bottom-blown converters, multi-blown converters, and other converters especially designed by different steel companies, and any kind of converter can be used in the present invention.

In the present invention, since agglomerated reduced iron as well as high-temperature molten iron is supplied as a main material from the iron making process, a converter having high heat efficiency may be used. In the present embodiment of the invention, a converter explained below may be used.

In the present embodiment of the invention, main materials for producing molten steel in the converter 20 are molten iron supplied by the iron making apparatus 10 and agglomerated reduced iron supplied by the second agglomerating device 14, and the converter 20 includes a lance 21 and a nozzle 22 on upper and lower sides thereof, respectively. Oxygen is blown through the nozzle 22 provided on the lower side of the converter 20 to refine molten steel. At this time, a fuel may be blown as a heat source together with oxygen. For example, coal or combustible gas may be blown as a fuel. However, any other kind of fuel may be used. Fuel may be blown together with oxygen or may be supplied and blown together with a carrier gas such as nitrogen through an additional nozzle. In addition to fuel, powder such as quicklime powder that can control the basicity of slag or function as seeds of a decarbonizing reaction may be blown through the lower side of the converter 20 together with oxygen or a carrier gas.

The lance 21 may be used to blow oxygen-containing gas such as air into the converter 20. Oxygen-containing gas blown into the converter 20 secondarily burns carbon monoxide (post-combustion) produced as a result of the decarbonization of molten steel, and thus the molten steel can be further heated. At this time, a heater may be additionally disposed on a supply passage of oxygen-containing gas to increase the combustion efficiency of the oxygen-containing gas. The heater may be any kind of heater. For example, the heater may be a heat exchanging type heater or a pebble heater using heat of waste gas discharged from the converter 20. The heater is denoted by reference numeral 211.

The converter 20 and the second agglomerating device 14 may be connected to each other through an agglomerated reduced iron transfer pipe 23. In this case, owing to the agglomerated reduced iron transfer pipe 23 connected between the converter 20 and the second agglomerating device 14, agglomerated reduced iron can be prevented from being oxidized while being transferred therebetween. The inside of the agglomerated reduced iron transfer pipe 23 may be filled with nitrogen gas. As described above, oxygen may be blown through the nozzle 22 provided in the lower portion of the converter 20. Instead of that, oxygen may be blown into the converter 20 through the lance 21 or another lance (not shown) to refine molten steel.

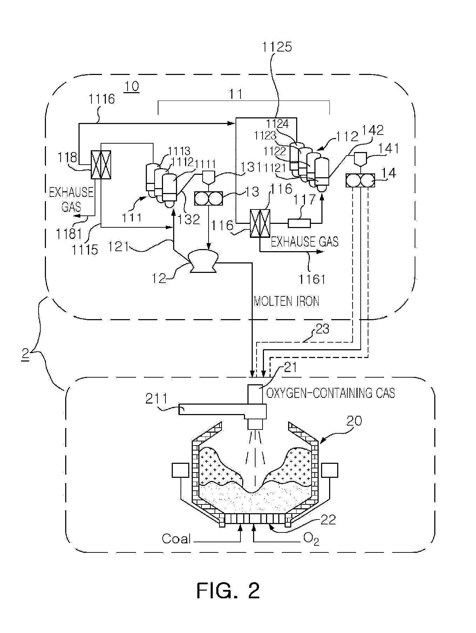

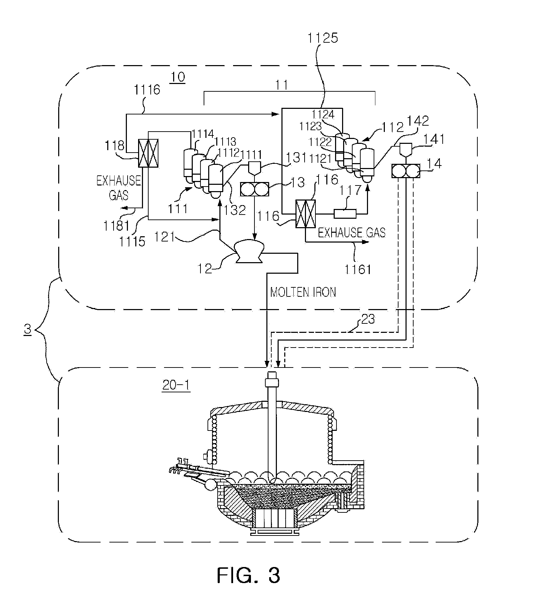

FIGS. 2 and 3 illustrate integrated systems for manufacturing steel according to other embodiments of the invention.

The integrated steel manufacturing system 2 of FIG. 2 has substantially the same structure as the integrated steel manufacturing system 1 of FIG. 1 except that first fluidized reduction furnace apparatus 111 includes three fluidized reduction furnaces 1111, 1112, and 1113.

The integrated steel manufacturing system 3 of FIG. 3 has substantially the same structure as the integrated steel manufacturing system 1 of FIG. 1 except that an electric furnace 20-1 is used instead of the converter 20. In addition, the number of smelting furnaces of the integrated steel manufacturing system 2 of FIG. 3 may be changed to the number of smelting furnaces in FIG. 2.

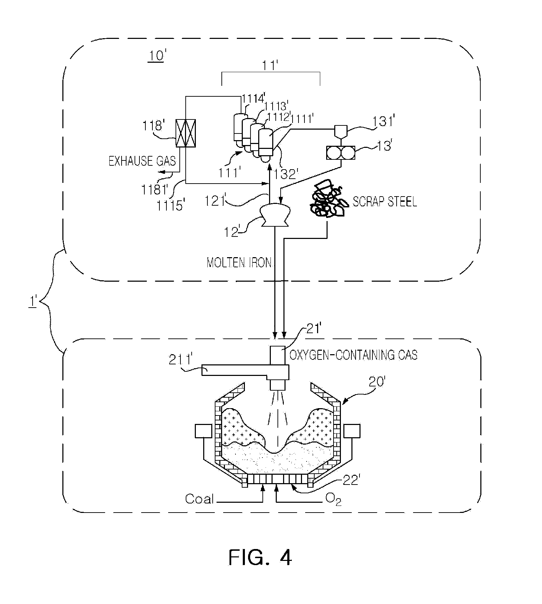

FIG. 4 is a schematic view illustrating an integrated system for manufacturing steel according to another embodiment of the invention. As shown in FIG. 4, the integrated steel manufacturing system 1' of the other embodiment includes an iron making apparatus 10' and a steel making apparatus 20' (a converter is shown as an example of the steel making apparatus 20', and the steel making apparatus 20' will be described hereinafter for the case in which the steel making apparatus 20' is a converter).

According to the other embodiment shown in FIG. 4, the iron making apparatus 10' includes: a fine iron ore reducing device 11' for reducing fine iron ore; an agglomerating device 13' for agglomerating fine iron ore reduced by the fine iron ore reducing device 11'; and a smelting furnace 12' for producing molten iron by melting fine iron ore agglomerated by the agglomerating device 13'.

The fine iron ore reducing device 11' includes a fluidized reduction furnace apparatus 111', and the fluidized reduction furnace apparatus 111' includes at least one fluidized reduction furnace. The fluidized reduction furnace 111' reduces fine iron ore while fluidizing the fine iron ore using gas. Fine iron ore is reduced step by step in a series of fluidized reduction furnaces of the fluidized reduction furnace apparatus 111'. That is, in the fluidized reduction furnaces, fine iron ore is reduced step by step by a reducing gas. The number of the fluidized reduction furnaces is not limited. For example, two or more fluidized reduction furnaces may be provided. In another example, three or four fluidized reduction furnaces may be provided.

As described above, the number of the fluidized reduction furnaces is not limited.

In the integrated steel manufacturing system shown in FIG. 4, the fluidized reduction furnace apparatus 111' includes four fluidized reduction furnaces 1111', 1112', 1113', and 1114'.

Like general fluidized reduction furnaces, fluidized reduction furnaces 1111', 1112', 1113', and 1114' may include gas distributing plates (not shown).

The agglomerating device 13' receives reduced fine iron ore from the fluidized reduction furnace apparatus 111' and agglomerates the reduced fine iron ore. The agglomerating device 13' includes a hopper 131' for storing reduced fine iron ore and supplying the reduced fine iron ore to the first agglomerating device 13', and the hopper 131' is connected to the final fluidized reduction furnace 1111' of the fluidized reduction furnace apparatus 111' through a reduced iron supply pipe 132' to receive reduced fine iron ore.

The smelting furnace 12' produces molten iron by melting agglomerated reduced iron received from the first agglomerating device 13'.

The smelting furnace 12' is connected to final fluidized reduction furnace 1111' of the fluidized reduction furnace apparatus 111' of the fine iron ore reducing device 10' through a gas supply pipe 121' so that gas can flow therebetween, and the fluidized reduction furnaces 1111', 1112', 1113', and 1114' of the fluidized reduction furnace apparatus 111' are connected to each other through gas supply pipes (not shown) so that gas can flow therebetween.

Reducing gas is sequentially supplied through the gas supply pipe 121' to the fluidized reduction furnaces 1111', 1112', 1113', and 1114' from the final fluidized reduction furnace 1111' to the first fluidized reduction furnace 1114'.

On the other hand, fine iron ore is supplied to the fluidized reduction furnaces 1114', 1113', 1112', and 1111' from the first fluidized reduction furnace 1114' to the final fluidized reduction furnace 1111'. The fine iron ore is reduced by the reducing gas while being sequentially carried in the fluidized reduction furnaces 1114', 1113', 1112', and 1111'.

The final fluidized reduction furnace 1111' and the first fluidized reduction furnace 1114' of the fluidized reduction furnace apparatus 111' may be connected to each other through a circulation pipe 1115' so that gas can flow therebetween.

A carbon dioxide removing device 118' may be provided on the circulation pipe 1115', and an exhaust gas discharge pipe 1181' may be connected to the carbon dioxide removing device 118'.

In addition, a heater (not shown) may be provided on a portion of the circulation pipe 1115' between the carbon dioxide removing device 118' and the final fluidized reduction furnace 1111' so as to heat circulating gas.

The carbon dioxide removing device 118 provided on the circulation pipe 1115 removes carbon dioxide from gas emitted from the first fluidized reduction furnace 1114', and then the gas is supplied to the final fluidized reduction furnace 1111'. In this way, reducing gas can be recycled. In addition, the heater may be used to control the temperature of circulating gas.

In another embodiment of the invention, a dust collector (not shown) such as a wet-type dust collector may be disposed on an exhaust gas line such as the circulation pipe 1115'.

After the iron making process, a steel making process may be performed using the steel making apparatus including refining equipment. At this time, a sufficient amount of molten steel may not be obtained if molten iron produced by the smelting furnace of the iron making apparatus is only used. Therefore, in the current embodiment, a large amount of scrap steel is added in the range of 30 weight% to 70 weight% in a hot metal ratio (HMR). If the HMR is reduced to less than 30 weight%, heat may become insufficient. After scrap steel is supplied to the steel making apparatus, molten iron may be supplied to the steel making apparatus. To this end, a scrap steel feeder may be provided in front of the steel making apparatus. The scrap steel feeder may be a scrap steel chute. If the HMR is within the above-mentioned range, it may be difficult to maintain a sufficient amount heat in a general steel making apparatus, especially, in an apparatus for converting molten iron into molten steel. In this case, molten steel produced through a steel making process may not be sufficiently hot to be supplied to a continuous casting machine.

To address this problem, for example, pure oxygen may be blown into a converter to burn or oxidize elements such as C, Mn, and Fe and increase the temperature of molten steel using the combustion or reaction heat. If the temperature of molten steel is not sufficiently high, an excessive amount of oxygen may be blown thereinto to generate more oxidation heat, known as "over-blowing." In this case, Fe of molten steel may be excessively oxidized to cause problems such as loss of molten steel, excessive generation of slag, and excessive oxidation of slag.

Therefore, if a general converter is used in a general manner, it may be difficult to maintain the HMR within the above-mentioned low range proposed in the embodiment of the invention. Thus, according to the present invention, a converter or an electric furnace having a structure described below is used as a steel making apparatus.

That is, since main materials supplied in the steel making process include scrap steel fed on a separate path as well as hot molten iron, it may be required to use a thermally efficient method. To this end, in the embodiment of the invention, the steel making apparatus may include the following converter.

That is, in the embodiment of the invention, the main materials for producing molten steel in the converter 20' are molten iron supplied from the iron making apparatus 10' and scrap steel supplied through a separate path, and the converter 20' includes a lance 21' and a nozzle 22' on upper and lower sides thereof. Oxygen is blown through the nozzle 22' provided in the lower portion of the converter 20' to refine molten steel. At this time, a fuel may be blown as a heat source, together with oxygen. For example, coal or combustible gas may be blown as a fuel. However, any other kind of fuel may be used. In addition, fuel may be blown together with oxygen or may be supplied and blown together with a carrier gas such as nitrogen through an additional nozzle. In addition to fuel, powder such as quicklime powder that can control the basicity of slag or function as seeds of a decarbonizing reaction may be blown through the lower side of the converter 20' together with oxygen or a carrier gas.

The lance 21' may be used to blow oxygen-containing gas such as air into the converter 20'. Oxygen-containing gas blown into the converter 20' secondarily burns carbon monoxide (post-combustion) produced as a result of decarbonization of molten steel, and thus the molten steel can be further heated. At this time, a heater may be additionally disposed on a supply passage of oxygen-containing gas to increase the combustion efficiency of the oxygen-containing gas. The heater may be any kind of heater. For example, the heater may be a heat exchanging type heater or a pebble heater using heat of waste gas discharged from the converter 20'. The heater is denoted by reference numeral 211'.

According to research carried out by the inventors, the temperature (T), flow rate (Q), and blowing time (t) of oxygen-containing gas may satisfy the following Formula 1.

[Formula 1]

$$0.1 \leq aTQt \leq 6$$

where a denotes a proportional constant, $1.25 \times 10^{-7}(1/(°C \cdot m^3))$, and units of T, Q, and t are °C, $m^3$/time, and time.

Formula 1 shows a relationship among conditions for generating sufficient heat by post-combustion for the case in which HMR is low as in the present embodiment of the invention. It is preferable that aTQt be equal to or greater than 0.1. However, since post-combustion is a process of re-combusting carbon monoxide rising in molten steel, the amount of carbon monoxide is limited, and thus if aTQt is equal to or greater than 6, blowing efficiency decreases. Therefore, the upper limit of aTQt is set to be 6.

Oxygen may be blown into the converter through the nozzle 22' disposed in the lower portion of the converter so as to refine molten steel. However, oxygen may instead be blown through the lance 21' or an additional lance (not shown).

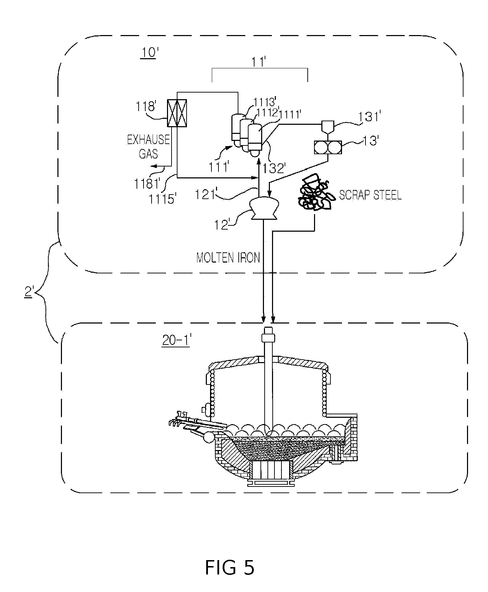

FIG. 5 illustrates an integrated system for manufacturing steel according to another embodiment of the invention.

The integrated steel manufacturing system 2' of FIG. 5 is substantially the same as the integrated steel manufacturing system 1' of FIG. 4 except that an electric furnace 20-1' is used instead of the converter 20' as a steel making apparatus. The electric furnace 20-1' includes an electrode for generating heat by an electric arc. In the case in which HMR is low as in the case of the invention, molten steel can be sufficiently heated using the electric furnace 20-1'.

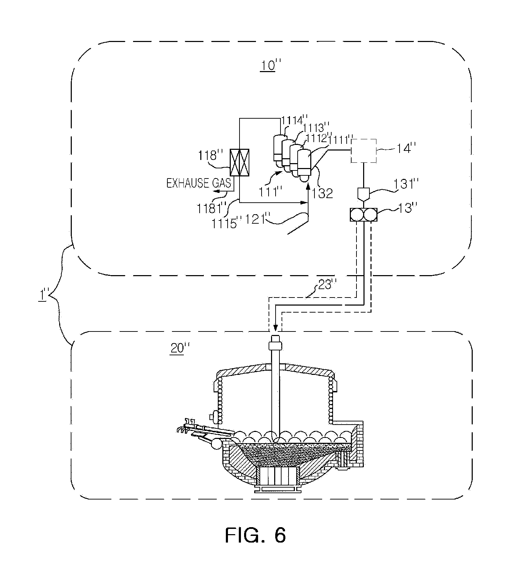

FIG. 6 illustrates an integrated system for manufacturing steel according to another embodiment of the invention. Referring to FIG. 6, the integrated steel manufacturing system 1" includes an agglomerated reduced iron making apparatus 10" and an electric furnace 20".

According to the other embodiment shown in FIG. 6, the agglomerated reduced iron making apparatus 10" includes: a fine iron ore reducing device 11" for reducing fine iron ore; and an agglomerating device 13" for agglomerating fine iron ore reduced by the fine iron ore reducing device 11".

The fine iron ore reducing device 11" includes fluidized reduction furnace apparatus 111", and the fluidized reduction furnace apparatus 111" includes at least one fluidized reduction furnace. The fluidized reduction furnace 111" reduces fine iron ore while fluidizing the fine iron ore using gas. Fine iron ore is reduced step by step in a series of fluidized reduction furnaces of the fluidized reduction furnace apparatus 111". That is, in the fluidized reduction furnaces, fine iron ore is reduced step by step by a reducing gas. The number of the fluidized reduction furnaces is not limited. For example, two or more fluidized reduction furnaces may be provided. In another example, four fluidized reduction furnaces may be provided.

As described above, the number of the fluidized reduction furnaces is not limited.

In the integrated steel manufacturing system shown in FIG. 4, the fluidized reduction furnace apparatus 111" includes four fluidized reduction furnaces 1111", 1112", 1113", and 1114".

Like general fluidized reduction furnaces, fluidized reduction furnaces 1111", 1112", 1113", and 1114" may include gas distributing plates (not shown).

The agglomerating device 13" receives reduced fine iron ore from the fluidized reduction furnace apparatus 111" and agglomerates the reduced fine iron ore. The agglomerating device 13" includes a hopper 131" for storing reduced fine iron ore and supplying the reduced fine iron ore to the first agglomerating device 13", and the hopper 131" is connected to the final fluidized reduction furnace 1111" of the fluidized reduction furnace apparatus 111" through a reduced iron supply pipe 132" to receive reduced fine iron ore.

The fluidized reduction furnaces 1111", 1112", 1113", and 1114" of the fluidized reduction furnace apparatus 111" are connected to each other through a gas supply pipe (not shown) so that gas can be supplied therethrough.

Reducing gas is supplied through the gas supply pipe 121" to the fluidized reduction furnaces 1111", 1112", 1113", and 1114" sequentially from the final fluidized reduction furnace 1111" to the first fluidized reduction furnace 1114". The reducing gas may be LNG or syngas. Alternatively, for the purpose of recycling of resources, the reducing gas may be by-product gas emitted from a steel mill such as coke out gas (COG) or Finex out gas (FOG) (Herein, Finex refers to equipment including a smelting furnace for smelting and reducing iron, reduced and agglomerated by an apparatus such as the agglomerated reduced iron making apparatus 10).

Fine iron ore is supplied to the fluidized reduction furnaces 1114", 1113", 1112", and 1111" from the first fluidized reduction furnace 1114" to the final fluidized reduction furnace 1111". The fine iron ore is reduced by the reducing gas while being sequentially carried in the fluidized reduction furnaces 1114", 1113", 1112", and 1111".

The final fluidized reduction furnace 1111" and the first fluidized reduction furnace 1114" of the fluidized reduction furnace apparatus 111" may be connected to each other through a circulation pipe 1115" so that gas can flow therebetween.

A carbon dioxide removing device 118" may be provided on the circulation pipe 1115", and an exhaust gas discharge pipe 1181" may be connected to the carbon dioxide removing device 118".

In addition, a heater (not shown) may be provided on a portion of the circulation pipe 1115" between the carbon dioxide removing device 118" and the final fluidized reduction furnace 1111" so as to heat circulating gas.

The carbon dioxide removing device 118 provided on the circulation pipe 1115 removes carbon dioxide from gas emitted from the first fluidized reduction furnace 1114", and then the gas is supplied to the final fluidized reduction furnace 1111". In this way, reducing gas can be recycled. In addition, the heater may be used to control the temperature of circulating gas.

In another embodiment of the invention, a dust collector (not shown) such as a wet-type dust collector may be disposed on an exhaust gas line such as the circulation pipe 1115".

In addition, for more stable reducing, additional reducing equipment 14" such as a rotary hearth furnace (RHF) may be disposed after the fluidized reduction furnace apparatus 111" so as to further reduce agglomerated reduced iron. For example, the additional reducing equipment 14" may be disposed in front of or behind the agglomerating device 13".

After the iron making process, a steel making process may be performed using a steel making apparatus including refining equipment. In the steel making process, molten iron is not supplied but agglomerated reduced iron is supplied, and thus a large amount of heat may be required to heat and reduce the agglomerated reduced iron. To this end, according to the present embodiment of the invention, the electric furnace 20" may be used. The electric furnace 20" generates heat by creating an electric arc using an electrode, and is thus suitable to heat agglomerated reduced iron having a relatively low calorific power.

The electric furnace 20" can use any kind of electric power such as DC power, AC power, 2-phase AC power, and 3-phase AC power.

A reducing agent may be supplied to the electric furnace 20" for facilitate reducing of agglomerated reduced iron. Examples of the reducing agent include: carbon reducing agents such as recarbonizing agents, coal, coal briquettes, coke, and fine coal; waste reducing agents such as waste plastics; ferroalloy reducing agents such as ferrosilicon and ferromanganese; and metal reducing agents such as aluminum, silicon, and manganese.

Since the electric furnace 20" can generate a large amount heat, scrap steel may be supplied to the electric furnace 20" together with agglomerated reduced iron for producing more molten steel. In this case, the whole charging materials (agglomerated reduced iron + scrap steel, hereinafter referred to as main materials) may include 30 weight% or more of scrap steel, preferably, 30 weight% to 90 weight% of scrap steel.

The converter 20" and the agglomerating device 13" may be connected to each other through an agglomerated reduced iron transfer pipe 23". In this case, owing to the agglomerated reduced iron transfer pipe 23" connected between the converter 20" and the agglomerating device 13", agglomerated reduced iron can be prevented from being oxidized while being transferred therebetween. The inside of the agglomerated reduced iron transfer pipe 23" may be filled with nitrogen gas.

In the present embodiment of the invention, a slab casting apparatus may be disposed downstream of the steel making apparatus so as to cast motel steel into slabs. For compact equipment structure, the slab casting apparatus may include a continuous casting machine and a rolling mill, and the continuous casting machine and the rolling mill my be arranged in series. Herein, the expression "arranged in series" means that a slab outlet of the continuous casting machine is substantially the same as a slab inlet of the rolling mill. In other words, the continuous casting machine and the rolling mill are installed at substantially the same space.

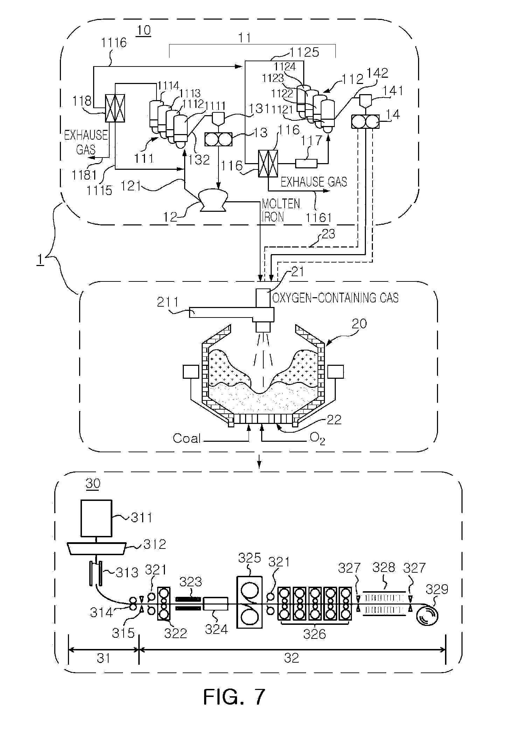

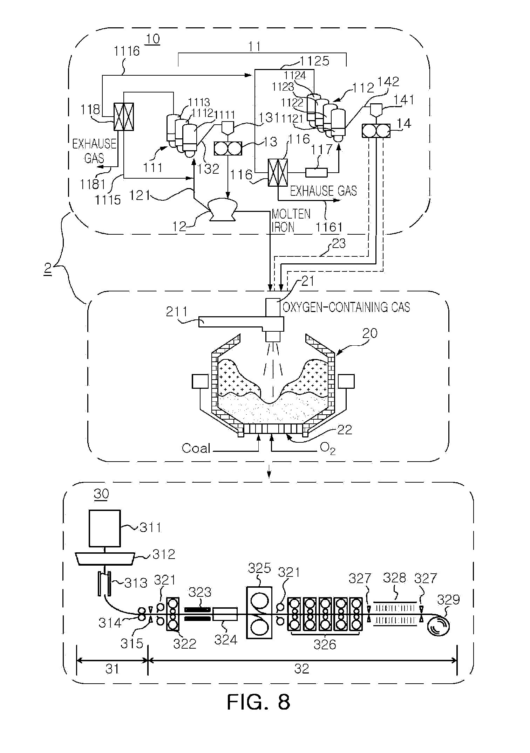

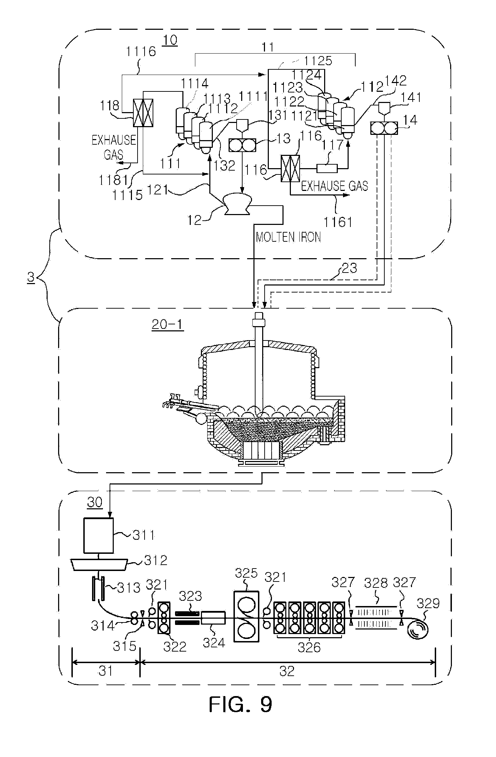

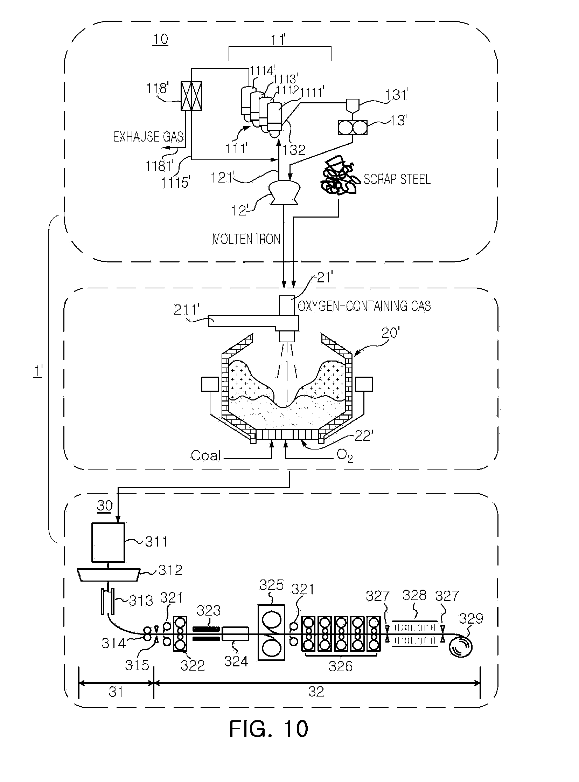

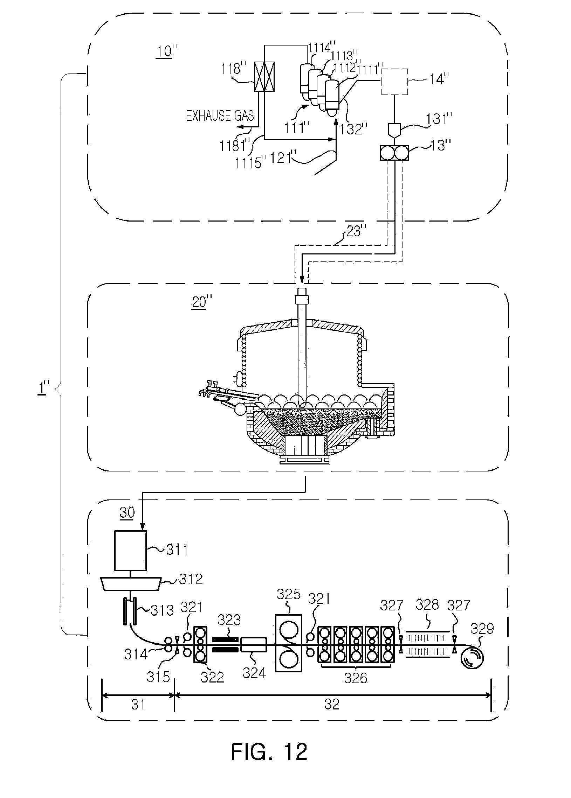

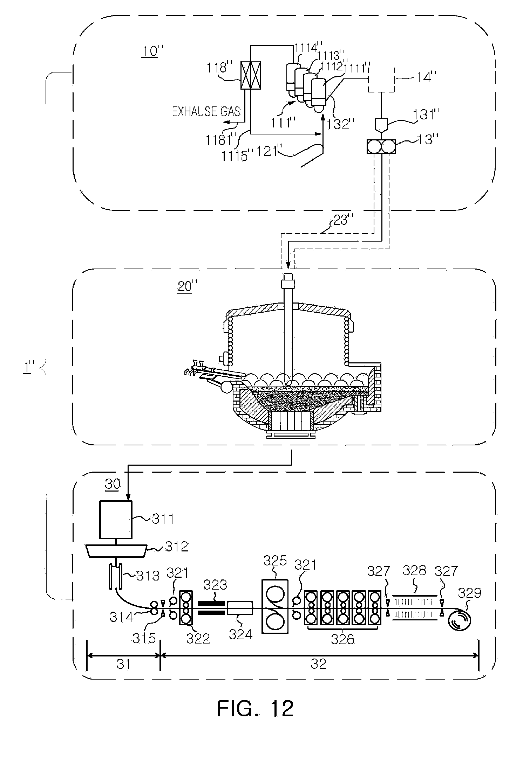

FIGS. 7 to 12 illustrate systems constructed by adding slab casting apparatuses 30 to the integrated steel manufacturing systems 1, 2, 3, 1', 2', and 1" of FIGS. 1 to 6. As shown in the drawings, the slab casting apparatus 30 include a continuous casting machine 31 for continuously casting molten steel produced from the converter 20 or the electric furnace 20-1 into a slab. If the thickness of a slab is too thick, it may be difficult to roll the slab with a rolling mill. That is, to roll a slab immediately after the slab is cast by the continuous casting machine 31, the slab may be cast to have a thickness of 30 mm to 150 mm. Preferably, the thickness of the slab may be equal to or less than 120 mm or equal to less than 100 mm, and more preferably, the thickness of the slab may be 70 mm to 100 mm. In some preferable embodiments, the thickness of a slab discharged from a mold 313 of the continuous casting machine 31 may be 40 mm to 200 mm, and the ratio of reduction at a liquid core reduction region 314 located just before an outlet of the continuous casting machine 31 may be 40% or less, 30% or less, or 25% or less. The liquid core reduction may not be performed if a desired slab thickness is obtained.

A slab discharged from the continuous casting machine 31 is rolled by a rolling mill 32. A slab cutting device 315 may be disposed between the continuous casting machine 31 and the rolling mill 32 so that work can proceed continuously even in the case that the processing rates of the continuous casting machine 31 and the rolling mill 32 are different.

The rolling mill 32 includes a finishing mill 326 for rolling into steel sheets. A heater 324 may be disposed between the continuous casting machine 31 and the finishing mill 326. The heater 324 may be an induction furnace or a tunnel furnace, and the induction furnace may be preferred for compact equipment structure. A slab discharge unit 323 may be disposed at at least one place before or after the heater 324 (in the drawings, the slab discharge unit 323 is disposed before the heater 324). The slab discharge unit 323 may discharge a slab in a perpendicular (transverse) direction to a slab feeding direction for dealing with errors at the previous or next process or separating a defective slab. The slab discharge unit 323 may have a length corresponding to the length of one or two slabs (for example, 5.5 m to 11 m).

If necessary, a slab is heated, and the slab is rolled to a desired thickness through a finish rolling process. At this time, final products may be coiled or not coiled depending on the thicknesses thereof or consumer's requests. The finishing mill 326 may include three to eight roller rows. More specifically, the finishing mill 326 may include four to seven roller rows. A cooling device 328 may be disposed after the finishing mill 326.

A coil box 325 may be disposed before the finishing mill 326. For example, the coil box 325 may be disposed between the heater 324 and the finishing mill 326. The coil box 325 may coil and store a slab or a steel sheet roughly rolled according to an embodiment of the invention. The coil box 325 may function as a buffer for having time to spare, making the temperature of a steel sheet uniform, or handling different processing rates of the finishing mill 326 and the continuous casting machine 31 or a roughing mill 322 (described later) provided according to another embodiment of the invention. The coil box 325 may be thermally insulated. In the case of a continuous rolling process, a steel sheet may not be fed through the coil box 325.

In another embodiment of the invention, the roughing mill 322 may be disposed between the continuous casting machine 31 and the finishing mill 326. The roughing mill 322 may be disposed at any position between the continuous casting machine 31 and the finishing mill 326. For example, the roughing mill 322 may be disposed before the coil box 325 at a position in front of the heater 324.

A scale removing device 321 may be disposed in front of at least one of the roughing mill 322 and the finishing mill 326 to remove scale from a steel sheet before a rolling process for protecting the steel sheet or rollers. A cutting machine 327 may be disposed after the finishing mill 326 to cut a steel sheet into desired lengths. The cutting machine 327 may be a shearing machine.

In the present invention, the structures of the fluidized reduction furnace, the agglomerating device, and the smelting furnace are not limited. For example, the fluidized reduction furnace, the agglomerating device, and the smelting furnace may have conventional structures known in the art to which the present invention pertains.

Herein, the terms "first" and "second" are not used to indicate the order of elements but are used to distinguish one element from another element.

In addition, the terms "initial" and "final" are used based on the feeding direction of fine iron ore. For example, a fluidized reduction furnace to which fine iron ore is first supplied is referred as a first fluidized reduction furnace, and a fluidized reduction furnace to which fine iron ore is finally supplied is referred to as a final fluidized reduction furnace.

In embodiments of the invention, the converter is explained as a device for converting molten iron to molten steel in a steel making process. However, an electric furnace may be used instead of the converter. In addition, after a steel making process, a secondary refining process may be additionally performed. The secondary refining process may be performed on molten steel discharged from a converter or an electric furnace to adjust the composition of the molten steel according to properties of final products and to adjust the temperature of the molten steel to a temperature suitable for casting. The secondary refining process may include any secondary refining process or may be performed using any secondary refining device known in the art to which the present invention pertains, such as a bubbling device, a vacuum refining device, and a molten steel heating device. That is, the secondary refining process is not limited to any particular process or equipment. In an embodiment of the invention, the steel making apparatus may further include a secondary refining device on a downstream side of the converter.

Furthermore, in the steel making process, at least one of a desulfurizing device, a dephosphorizing device, and a desulfurizing and dephosphorizing device may be disposed between the smelting furnace and the converter (or the electric furnace) to remove sulfur or phosphorus from molten iron produced by the smelting furnace and then supply molten iron to the converter or the electric furnace. In addition, any pretreatment process known as "a primary refining process" in the steel industry, performed before a process by the converter or the electric furnace, may be included in the steel making process of the invention. That is, the steel making apparatus of the invention may be understood as a system including: a converter or electric furnace; and a hot metal pretreatment device and a secondary refining device disposed in front of or behind the converter or electric furnace. However, such devices are not essential devices and thus may not be included in the steel making apparatus.

An integrated method for manufacturing steel will now be described with reference to FIG. 1 according to an embodiment of the invention.

As shown in FIG. 1, according to the present embodiment of the invention, molten iron is produced using the steel making apparatus 1, including the iron making apparatus 10 and the converter 20. The iron making apparatus 10 includes: the fine iron ore reducing device 11; the first agglomerating device 13; the second agglomerating device 14; and the smelting furnace 12. The fine iron ore reducing device 11 includes the first fluidized reduction furnace apparatus 111 and the second fluidized reduction furnace apparatus 112.

In the present embodiment of the invention, fine iron ore is processed into reduced fine iron ore by the first fluidized reduction furnace apparatus 111 and the second fluidized reduction furnace apparatus 112.

In detail, fine iron ore and other materials are supplied to the fluidized reduction furnaces, and the fine iron ore and other materials are reduced while reducing gas is introduced through the gas supply pipe to form gas flow layers. The fine iron ore supplied to the fluidized reduction furnaces may have a sufficiently large specific area and small grain size so as to be easily blown and reduced by reducing gas. In the present embodiment of the invention, fine iron ore having a grain size of 12 mm or less may be used. Preferably, fine iron ore having a grain size of 10 mm or less may be used. More preferably, fine iron ore having a grain size of 8 mm or less may be used.

It may be preferable that fine iron ore be reduced to a reduction degree of 50% to 80% by the first fluidized reduction furnace apparatus 111. In the present embodiment of the invention, as described below, reducing gas (known as "FOG") containing a relatively large amount of dust and sulfur and discharged from the smelting furnace 12 is used to reduce fine iron ore, and thus if fine iron ore is reduced to a high reduction degree by the reducing gas, a sticking phenomenon may occur. Therefore, due to the sticking phenomenon and the possibility of additional reduction in the smelting furnace 12, the reduction degree at the first fluidized reduction furnace apparatus 111 may be set to be within the above-mentioned range. It may be preferable that fine iron ore be reduced to a reduction degree of 80% to 95% by the second fluidized reduction furnace apparatus 112. In another embodiment of the invention, gas exhausted from the first fluidized reduction furnace apparatus 111 is used as reducing gas in the second fluidized reduction furnace apparatus 112. Since dust and sulfur are removed from the exhaust gas, the possibility the above-described problem reduces, and thus the reduction degree at the second fluidized reduction furnace apparatus 112 may be set to be within the above-mentioned range.

Fine iron ore reduced by the first fluidized reduction furnace apparatus 111 and the second fluidized reduction furnace apparatus 112 is supplied to the first agglomerating device 13 and the second agglomerating device 14, respectively, so as to produce agglomerated reduced iron. The first and second agglomerating devices 13 and 14 may produce agglomerated reduced iron according to a method known in the art to which the present invention pertains, such as methods using apparatuses disclosed in Korean Patent Application Laid-open Publication Nos.: 10-2005-0068319 and 10-2003-0085795. That is, various techniques known in the related art may be used to produce agglomerated reduced iron using the first and second agglomerating devices 13 and 14.

Thereafter, agglomerated reduced iron produced by the first agglomerating device 13 is supplied to the smelting furnace 12 to produce molten iron.

It may be preferable that agglomerated reduced iron produced by the first and second agglomerating devices 13 and 14 be at a high temperature of 500°C to 800°C when being supplied to the smelting furnace 12 or the steel making apparatus. A reducing agent may be supplied to the smelting furnace 12 together with the agglomerated reduced iron so as to further reduce molten iron. The reducing agent may be a carbon reducing agent such as a coal reducing agent. Examples of coal reducing agents include coal briquettes, lump coal, and coke.

Molten iron produced by the smelting furnace 12, and agglomerated reduced iron produced by the second agglomerating device 14 are supplied to the converter 20 to produce molten steel. Before the molten iron is supplied to the converter 20, the molten iron may be processed through at least one of a desulfurizing process, a dephosphorizing process, and a desulfurizing and dephosphorizing process, and any other pretreatment process.

For efficient processing in the converter 20, it may be preferable that 40% to 80% of molten iron and 20% to 60% of agglomerated reduced iron be supplied to the converter 20.

Referring to FIG. 1, molten iron is produced from agglomerated reduced iron prepared through the first fluidized reduction furnace apparatus 111. However, molten iron may be produced from agglomerated reduced iron prepared through the second fluidized reduction furnace apparatus 112. In addition, all the agglomerated reduced iron produced through the first fluidized reduction furnace apparatus 111 may not be supplied to the smelting furnace 12. That is, a portion of the agglomerated reduced iron produced through the first fluidized reduction furnace apparatus 111 may directly be supplied to the steel making apparatus. Similarly, all of the agglomerated reduced iron produced through the second fluidized reduction furnace apparatus 112 may not be supplied to the steel making apparatus but some thereof may be supplied to the smelting furnace 12. If one of the first and second fluidized reduction furnace apparatuses 111 and 112 is out of order, some or all of the agglomerated reduced iron produced through the other fluidized reduction furnace apparatus may be supplied to the smelting furnace 12.

In the integrated method for manufacturing steel, exhaust gas discharged from the first fluidized reduction furnace apparatus 111 may be supplied as reducing gas to the second fluidized reduction furnace apparatus 112 through the reducing gas connection pipe 1116.

Exhaust gas discharged from at least one of the first and second fluidized reduction furnace apparatuses 111 and 112 may be circulated as a reducing gas. The exhaust gas may undergo at least one of a carbon dioxide removing process performed by the carbon dioxide removing device 116 or 118 and a temperature adjusting process performed by the heater 117 (a heater on the first fluidized reduction furnace apparatus 111 is not shown), and then the exhaust gas may be supplied to the other of the first and second fluidized reduction furnace apparatuses 111 and 112.

When molten steel is produced in the converter 20, fuel and oxygen ($O_2$) may be supplied through the lower side of the converter 20 to heat the molten steel. In addition, a granular material such as quicklime powder that can control the basicity of slag and function as seeds of a decarbonizing reaction may be blown into the converter 20 together with fuel and oxygen.

In addition, when molten steel is produced in the converter 20, oxygen-containing gas such as air may be blown into the converter 20 from the upper side of the converter 20 so as to secondarily burn carbon monoxide (post-combustion) and thus to increase thermal efficiency. The oxygen-containing gas may be blown into the converter 20 after being heated, so as to increase thermal efficiency. For this, the oxygen-containing gas may be blown into the converter 20 after heat exchange with waste gas discharged from the converter 20.

An integrated method for manufacturing steel will now be described with reference to FIG. 4 according to another embodiment of the invention.

As shown in FIG. 4, according to the other embodiment of the invention, molten iron is produced using the steel making apparatus including the iron making apparatus 10' and the converter 20'. The iron making apparatus 10' includes: the fine iron ore reducing device 11'; the agglomerating device 13'; and the smelting furnace 12'. The fine iron ore reducing device 11' includes the fluidized reduction furnace apparatus 111'.

In the present embodiment of the invention, fine iron ore is processed into reduced fine iron ore by the fluidized reduction furnace apparatus 111'.

In detail, fine iron ore and other materials are supplied to the fluidized reduction furnaces, and the fine iron ore and other materials are reduced while reducing gas is introduced through the gas supply pipe to form gas flow layers. The fine iron ore supplied into the fluidized reduction furnaces may have a sufficiently large specific area and small grain size so as to be easily blown and reduced by reducing gas. In the present embodiment of the invention, fine iron ore having a grain size of 12 mm or less may be used. Preferably, fine iron ore having a grain size of 10 mm or less may be used. More preferably, fine iron ore having a grain size of 8 mm or less may be used.

It may be preferable that fine iron ore be reduced to a reduction degree of 50% or greater by the fluidized reduction furnace apparatus 111' for easy additional reduction at the smelting furnace 12'. In the present embodiment of the invention, as described below, reducing gas (known as "FOG") containing a relatively large amount of dust and sulfur and discharged from the smelting furnace 12' is used to reduce fine iron ore, and thus if fine iron ore is reduced to a high reduction degree by the reducing gas, a sticking phenomenon may occur. Therefore, when the sticking phenomenon and additional reduction in the smelting furnace 12' are considered, it may be preferable that the reduction degree at the fluidized reduction furnace apparatus 111' be 80% or less.

Fine iron ore reduced by the fluidized reduction furnace apparatus 111' is supplied to the agglomerating device 13' to produce agglomerated reduced iron. The agglomerating device 13' may produce agglomerated reduced iron according to a method known in the art to which the present invention pertains, such as methods using apparatuses disclosed in Korean Patent Application Laid-open Publication Nos.: 10-2005-0068319 and 10-2003-0085795. That is, various techniques known in the related art may be used to produce agglomerated reduced iron using the agglomerating devices 13'.

Thereafter, agglomerated reduced iron produced by the agglomerating device 13' is supplied to the smelting furnace 12' to produce molten iron.

It may be preferable that agglomerated reduced iron produced by the agglomerating device 13' be at a high temperature of 500°C to 800°C when being supplied to the smelting furnace 12'. A reducing agent may be supplied to the smelting furnace 12' together with the agglomerated reduced iron so as to further reduce molten iron. The reducing agent may be a carbon reducing agent such as a coal reducing agent. Examples of coal reducing agents include coal briquettes, lump coal, and coke.

At this time, Si included in the molten iron may be burned by oxygen blown into the steel making apparatus to heat the molten iron. Therefore, it may be preferable that the molten iron include 0.1 weight% or more of Si. More preferably, the molten iron may include 0.3 weight% or more of Si. However, if the concentration of Si is too high, the basicity of slag may be excessively increased in a steel making process, and thus processes such as a desulfurizing process or a dephosphorizing process may be inefficiently performed. Therefore, the upper limit of the concentration of Si may be set to be 1.0 weight%, preferably, 0.5 weight%.

The molten iron produced by the smelting furnace 12' is supplied to the converter 20' together with scrap steel to produce molten steel. Before the molten iron is supplied to the converter 20', the molten iron may be processed through at least one of a desulfurizing process, a dephosphorizing process, and a desulfurizing and dephosphorizing process, and any other pretreatment process. At this time, to produce a sufficient amount of molten steel, it may be preferable that HMR be set to be 70% or less. That is, it may be required to increase the portion of scrap steel so as to produce a sufficient amount of molten steel. However, if the portion of scrap steel is too high, sufficient heating is difficult. Therefore, it may be preferable that HMR be 30% or greater.

In the fluidized reduction furnace apparatus 111', exhaust gas discharged from the first fluidized reduction furnace may be circulated as reducing gas. The exhaust gas may undergo at least one of a carbon dioxide removing process performed by the carbon dioxide removing device 118' and a temperature adjusting process performed by a heater (not shown), and then the exhaust gas may be supplied to the final fluidized reduction furnace of the fluidized reduction furnace apparatus 111'.

When molten steel is produced in the converter 20', fuel and oxygen ($O_2$) may be supplied through the lower side of the converter 20' to heat the molten steel. In addition, a granular material such as quicklime powder that can control the basicity of slag and function as seeds of a decarbonizing reaction may be blown into the converter 20' together with fuel and oxygen.

In addition, when molten steel is produced in the converter 20', oxygen-containing gas such as air may be blown into the converter 20' from the upper side of the converter 20' so as to secondarily burn carbon monoxide (post-combustion) and thus to increase thermal efficiency. The oxygen-containing gas may be blown into the converter 20' after being heated, so as to increase thermal efficiency. For this, the oxygen-containing gas may be blown into the converter 20' after heat exchange with waste gas discharged from the converter 20'.

With reference to FIG. 6, an integrated method for manufacturing steel will now be described according to another embodiment of the invention. As shown in FIG. 6, according to the other embodiment of the invention, molten iron is produced using the agglomerated reduced iron making apparatus 10" and the electric furnace 20". The agglomerated reduced iron making apparatus 10" includes the fine iron ore reducing device 11" and the agglomerating device 13". The fine iron ore reducing device 11" includes the fluidized reduction furnace apparatus 111".

In the other embodiment of the invention, fine iron ore is processed into reduced fine iron ore by the fluidized reduction furnace apparatus 111" of the agglomerated reduced iron making apparatus 10".

In detail, fine iron ore and other materials are supplied to the fluidized reduction furnaces, and the fine iron ore and other materials are reduced while reducing gas is introduced through the gas supply pipe to form gas flow layers. The fine iron ore supplied into the fluidized reduction furnaces have a sufficiently large specific area and small grain size so as to be easily blown and reduced by reducing gas. In the other embodiment of the invention, fine iron ore having a grain size of 12 mm or less may be used. Preferably, fine iron ore having a grain size of 10 mm or less may be used. More preferably, fine iron ore having a grain size of 8 mm or less may be used.

It may be preferable that fine iron ore be reduced to a reduction degree of 80% or greater by the fluidized reduction furnace apparatus 111" for easy additional reduction at the electric furnace 20". It is preferable that fine iron ore be reduced as much as possible, the upper limit of the reduction degree of fine iron ore is not limited.

Fine iron ore reduced by the fluidized reduction furnace apparatus 111" is supplied to the agglomerating device 13" to produce agglomerated reduced iron. The agglomerating device 13" may produce agglomerated reduced iron according to a method known in the art to which the present invention pertains, such as methods using apparatuses disclosed in Korean Patent Application Laid-open Publication Nos.: 10-2005-0068319 and 10-2003-0085795. That is, various techniques known in the related art may be used to produce agglomerated reduced iron using the agglomerating devices 13".

Thereafter, agglomerated reduced iron produced by the agglomerating device 13" is supplied to the electric furnace 20" to produce molten steel. It may be preferable that agglomerated reduced iron produced by the agglomerating device 13" be at a high temperature of 500°C to 800°C when being supplied to the electric furnace 20".

At this time, for stably obtaining a desired reduction degree in the other embodiment of the present invention, additional reducing equipment 14" such as a rotary hearth furnace (RHF) that can produce direct reduction iron (DRI) may be disposed after the fluidized reduction furnace apparatus 111" so as to further reduce agglomerated reduced iron. In addition, for obtaining a more stable degree of reduction, additional reducing equipment 14" such as a rotary hearth furnace (RHF) may be disposed after the fluidized reduction furnace apparatus 111" so as to further reduce agglomerated reduced iron. For example, the additional reducing equipment 14" may be disposed in front of or behind the agglomerating device 13". In this case, the reduction degree of agglomerated reduced iron at the fluidized reduction furnace apparatus 111" may not be equal to or greater than 80%. That is, it may be sufficient that the reduction degree of agglomerated reduced iron be equal to or greater than 80% when the agglomerated reduced iron is supplied into the electric furnace 20".

In the fluidized reduction furnace apparatus 111", exhaust gas discharged from the first fluidized reduction furnace may be circulated as reducing gas. The exhaust gas may undergo at least one of a carbon dioxide removing process performed by the carbon dioxide removing device 118" and a temperature adjusting process performed by a heater (not shown), and then the exhaust gas may be supplied to the final fluidized reduction furnace of the fluidized reduction furnace apparatus 111".

In above-described steel making process, a secondary refining process may be additionally performed after a process by the converter (or the electric furnace in the other embodiment). The secondary refining process may be any secondary refining process known in the art to which the present invention pertains. That is, the secondary refining process is not limited to a particular process. In an embodiment of the invention, the steel making process may include a secondary refining process before or after a process by the converter. In addition, a hot metal pretreatment process may be performed before a process by the converter.

Furthermore, in the above-described embodiment, the converter is explained as an example of the steel making apparatus. However, as shown in FIG. 5, the electric furnace may be used instead of the converter. Since the electric furnace generate heat using an electric arc, a steel making process can be fully performed in the electric furnace even in the case that HMR is relatively low. Furthermore, according to the present invention, a relatively large amount of molten iron is used as compared to a steel making method of the related art in which only scrap steel is melted in an electric furnace, and thus various products having high quality can be manufactured.

According to another embodiment of the invention, a slab casting process may be performed after a steel making process. The slab casting process may include a continuous casting process and a rolling process for compact equipment structure. At this time, the continuous casting process and the rolling process may be performed in series.

Embodiments of the present invention will now be described with reference to FIGS. 7 to 12 showing the systems further including the slab casting apparatuses, as shown in the drawings. A slab is cast in a continuous casting process according to a continuous casting method. If the thickness of the slab is too thick, the load acting on the rolling mill 32 increases. Therefore, so as to roll the slab directly after the continuous casting process, it may be preferable that the slab produced in the continuous casting process have a thickness of 30 mm to 150 mm. More preferably, the slab may have a thickness of 120 mm or less, 100 mm or less, or 70 mm to 100 mm. In some preferable embodiments, the thickness of a slab discharged from the mold 313 of the continuous casting machine 31 may be 40 mm to 200 mm, and the ratio of reduction at the liquid core reduction region 314 located just before the outlet of the continuous casting machine 31 may be 40% or less, 30% or less, or 25% or less. The liquid core reduction may not be performed if a desired slab thickness is obtained. In addition, it may be preferable that the continuous casting process be performed at a rate of 4 mpm to 15 mpm, more preferably, 4 mpm to 8 mpm.

A slab discharged from the continuous casting process is rolled in the following rolling process. At this time, the slab may be cut after the continuous casting process and then be supplied to the following rolling process so that work can proceed continuously even in the case that the processing rates of the continuous casting process and the rolling mill process are different.

The rolling process may include a finish rolling process, and a heating process may be performed between the continuous casting process and the finish rolling process to heat a slab to a temperature level for the finish rolling process. A heater such as an induction furnace or a tunnel furnace may be used in the heating process. The induction furnace may be preferred for compact equipment structure. If an emergency situation occurs, a slab may be discharged from a position before or after the heater. A slab is rolled to a desired thickness as a final product through the finish rolling process. At this time, final products may be coiled or not coiled, depending on the thicknesses thereof or consumer's requests. A cooling process may be performed after the finish rolling process.

Before the finish rolling process, a storing process may be performed in which a slab or a steel sheet roughly rolled according to an embodiment of the invention may be coiled and stored in the coil box 325. The coil box 325 may function as a buffer for having time to spare, making the temperature of a steel sheet uniform, or handling different processing rates of the finishing mill 326 and the roughing mill 322 (described later) provided according to another embodiment of the invention. It may be preferable that the thickness of a steel sheet to be coiled and stored in the coil box 325 have a thickness of 20 mm or less. In the case of a continuous rolling process, the storing process may not be performed.

In another embodiment of the invention, a rough rolling process may be performed before the finish rolling process.

A scale removing process may be performed before at least one of the rough rolling process and the finish rolling process to remove scale from a steel sheet before a rolling process for protecting the steel sheet or rollers. A cutting process may be performed after the finish rolling process to cut a steel sheet into desired lengths. The cutting process may be performed before or after the cooling process.

As described above, according to the integrated steel manufacturing system of embodiments of the present invention, since both molten iron and agglomerated reduced iron can be produced by a single steel making apparatus, the amount of molten iron able to be produced by unit equipment is comparable to the amount of molten iron able to be produced by a large blast furnace such as a blast furnace having an annual capacity of three millions of tons or four millions of tons.

That is, 1.3 to 2.5 million tons of molten iron can be produced annually using the smelting furnace, and 1.3 to 2.5 million tons of agglomerated reduced iron can be produced annually by the agglomerating device and supplied directly to the converter. Therefore, high productivity comparable to that of a large blast furnace can be obtained by properly adjusting the amounts of molten iron and agglomerated reduced iron.

In addition, since the steel making apparatus, that is, the converter can have improved thermal efficiency, work can be done at a low HMR, and thus molten steel can be produced in flexible working environments.

In addition, according to the present invention, equipment can be compactly constructed without a blast furnace, and various high-quality products can be manufactured as compared to a typical electric-furnace steel making method not using a blast furnace (that is, as compared to a conventional electric-furnace steel making method that use only scrap steel).

Furthermore, according to the integrated system for manufacturing steel according to embodiments of the present invention, since agglomerated reduced iron is supplied to the electric furnace and is heated, molten steel can be produced using very compact equipment as compared to steel manufacturing systems of the related art.

**Claims**

1. An integrated system for manufacturing steel, comprising:

    an iron making apparatus; and
    a steel making apparatus configured to produce molten steel from molten iron and agglomerated reduced iron received from the iron making apparatus,
    wherein the iron making apparatus comprises:

    a fine iron ore reducing device comprising first and second fluidized reduction furnace apparatuses each comprising at least one fluidized reduction furnace for reducing fine iron ore;
    first and second agglomerating devices configured to agglomerate reduced fine iron ore received from the first and second fluidized reduction furnace apparatuses, respectively; and
    a smelting furnace configured to produce molten iron by melting agglomerated reduced iron received from the first agglomerating device.

2. The integrated system of claim 1, wherein a final fluidized reduction furnace of the first fluidized reduction furnace apparatus is connected to the smelting furnace through a gas supply pipe for allowing gas to flow therethrough, and a first fluidized reduction furnace of the first fluidized reduction furnace apparatus is connected to a final fluidized reduction furnace of the second fluidized reduction furnace apparatus through a reducing gas connection pipe for allowing gas to flow therethrough.

3. The integrated system of claim 1 or 2, wherein the steel making apparatus comprises a converter or an electric furnace, and the converter or the electric furnace is connected to the second agglomerating device through an agglomerated reduced iron transfer pipe to allow agglomerated reduced iron to be transferred therethrough.

4. An integrated system for manufacturing steel, comprising:

    an iron making apparatus; and
    a steel making apparatus configured to produce molten steel from molten iron received from the iron making apparatus and scrap steel,
    wherein the iron making apparatus comprises:

    a fine iron ore reducing device comprising fluidized reduction furnace apparatus that comprises at least one fluidized reduction furnace for reducing fine iron ore;
    an agglomerating devices configured to agglomerate reduced fine iron ore received from the fluidized reduction furnace apparatus; and
    a smelting furnace configured to produce molten iron by melting agglomerated reduced iron received from the agglomerating device.

5. The integrated system of claim 4, wherein the steel making apparatus comprises a converter or an electric furnace.

6. The integrated system of claim 3 or 5, wherein a nozzle is provided in a lower portion of the converter to supply fuel and oxygen ($O_2$) to the converter, and a lance is provided in an upper portion of the converter to supply oxygen-containing gas to the converter.

7. An integrated system for manufacturing steel, comprising:

   an agglomerated reduced iron making apparatus; and
   an electric furnace,
   wherein the agglomerated reduced iron making apparatus comprises:

   a fine iron ore reducing device comprising a fluidized reduction furnace apparatus that comprises at least one fluidized reduction furnace for reducing fine iron ore; and
   an agglomerating device configured to agglomerate reduced fine iron ore received from the fluidized reduction furnace apparatus.

8. The integrated system of any one of claims 1 to 7, further comprising a slab casting apparatus in which a continuous casting machine configured to cast molten steel produced by the steel making apparatus is connected to a rolling mill in series.

9. The integrated system of claim 8, wherein the continuous casting machine is configured to produce a slab having a thickness of 30 mm to 150 mm at a rate of 4 mpm to 15 mpm, and the rolling mill comprises a finishing mill,
   wherein the integrated system further comprises a steel sheet heater and a coil box that are disposed between the continuous casting machine and the finishing mill, and the coil box stores a steel sheet after coiling thereof.

10. The integrated system of claim 9, further comprising a roughing mill between the continuous casting machine and the finishing mill.

11. An integrated method for manufacturing steel, comprising:

   performing a molten iron making process; and
   performing a molten steel making process to produce molten steel from molten iron and agglomerated reduced iron that are produced in the molten iron making process,
   wherein the molten iron making process comprises:

   producing reduced fine iron ore by reducing fine iron ore in first and second fluidized reduction furnace apparatuses;
   producing agglomerated reduced iron in first and second agglomerating devices by using reduced fine iron ore, supplied from the first and second fluidized reduction furnace apparatuses to the first and second agglomerating devices, respectively; and
   producing molten iron in a smelting furnace by melting agglomerated reduced iron received from the first agglomerating device.

12. The integrated method of claim 11, wherein exhaust gas discharged from the first fluidized reduction furnace apparatus is supplied to the second fluidized reduction furnace apparatus to be used as a reducing gas.

13. An integrated method for manufacturing steel, comprising:

   performing a molten iron making process; and
   performing a molten steel making process to produce molten steel by using molten iron produced in the molten iron making process,
   wherein the molten iron making process comprises:

   producing reduced fine iron ore by fluidizing and reducing fine iron ore;
   producing agglomerated reduced iron by receiving and agglomerating the reduced fine iron ore; and
   producing molten iron by melting agglomerated reduced iron produced by an agglomerating device,
   wherein in the steel making process, scrap steel is used together with the molten iron at a hot melt ratio (HMR) of 70 weight% or less.

14. An integrated method for manufacturing steel, comprising:

   producing reduced fine iron ore by fluidizing and reducing fine iron ore;
   producing agglomerated reduced iron by receiving and agglomerating the reduced fine iron ore; and
   producing molten steel by melting the agglomerated reduced iron in an electric furnace.

15. The integrated method of any one of claims 11 to 14, further comprising performing a slab casting process in which a continuous casting process and a rolling process are performed in series, wherein the continuous casting process is performed to cast molten iron produced in the producing of the molten steel.

16. The integrated method of claim 16, wherein the continuous casting process is performed at a rate of 4 mpm to 15 mpm to produce a slab having a thickness of 30 mm to 150 mm, and the rolling process comprises a finish rolling process,
wherein the integrated method further comprises a steel sheet heating process and a coiling and storing process between the continuous casting process and the finishing rolling process, and a steel sheet is coiled and stored in the coiling and storing process.

17. The integrated method of claim 16, further comprising a rough process between the casting process and the finishing rolling process.

FIG. 1

FIG. 2

FIG. 3

FIG. 4

FIG 5

FIG. 6

FIG. 7

FIG. 8

FIG. 9

FIG. 10

FIG. 12

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050068319

- KR 1020030085795